Europäisches Patentamt

European Patent Office

Office européen des brevets

(11) Numéro de publication: **0 106 765**
**A1**

(12) # DEMANDE DE BREVET EUROPEEN

(21) Numéro de dépôt: **83401995.2**

(51) Int. Cl.³: **G 01 N 1/20**

(22) Date de dépôt: **13.10.83**

(30) Priorité: **14.10.82 FR 8217505**

(43) Date de publication de la demande:
**25.04.84 Bulletin 84/17**

(84) Etats contractants désignés:
**AT BE CH DE GB IT LI NL SE**

(71) Demandeur: **TRIPETTE & RENAUD Société Anonyme:**
**39, rue Jean Jacques Rousseau**
**F-75038 Paris Cedex 01(FR)**

(72) Inventeur: **Dolige, Jean-Pierre**
**20, rue de Marly**
**78620 l'Etang la Ville(FR)**

(74) Mandataire: **Boivin, Claude**
**9, rue Edouard-Charton**
**F-78000 Versailles(FR)**

(54) **Dispositif de prélèvement d'échantillons.**

(57) Dispositif de prélèvement d'échantillons dans un flux gravitaire d'un produit granuleux ou pulvérulent, qui comprend une cavité de prélèvement allongée de manière à couvrir toute la largeur du flux, et des moyens pour imprimer un mouvement de va-et-vient transversal à cette cavité.

La base de la cavité (3) est reliée à une source d'aspiration (6) de sorte que le contenu de cette acvité est évacué et transporté pneumatiquement.

FIG.1

EP 0 106 765 A1

- 1 -

## Dispositif de prélèvement d'échantillons.

Dans de nombreux domaines de l'industrie, en particulier de l'industrie agro-alimentaire, il est nécessaire de procéder régulièrement à des contrôles de qualité. Pour cela, on effectue un prélèvement d'un échantillon dans un lot et on contrôle cet échantillon en laboratoire.

Le prélèvement des échantillons se fait actuellement de manière manuelle ou de manière automatique. On cherche de plus en plus à automatiser les prélèvements afin d'éviter les facteurs humains qui peuvent privilégier certaines parties des lots. Les prélèvements automatiques sont cependant encore peu développés, car il existe peu d'appareils à la fois pratiques et effectuant des prélèvement statistiquement valables.

On connait en particulier des dispositifs de prélèvements automatiques d'échantillons dans un flux gravitaire d'un produit granuleux ou pulvérulent, qui comprennent une cavité de prélèvement allongée de manière à couvrir toute la largeur du flux, et des moyens pour imprimer un mouvement de va-et-vient transversal à cette cavité. Une partie du produit tombe dans la cavité et, dans les appareils existants, est évacuée de la cavité par gravité, par l'intermédiaire d'un conduit relié à la base de cette cavité.

La présente invention a pour objet un perfectionnement apporté aux dispositifs de prélèvements ci-dessus.

Le dispositif selon l'invention est caractérisé en ce que la base de la cavité est reliée à une source d'aspiration de sorte que le contenu de cette cavité est évacué et transporté pneumatiquement.

Dans un mode de réalisation avantageux de l'invention, la cavité est supportée par un arbre creux relié à la source d'aspiration. Cet arbre a ainsi une double fonction; il supporte la cavité et assure l'évacuation du contenu de celle-ci.

Le dispositif selon l'invention présente l'avantage d'avoir un encombrement très réduit. Ce facteur est extrêmement important, car les dispositifs de prélèvement actuels sont de dimensions relativement grandes et il est souvent difficile de les insérer dans une installation existante. Dans le dispositif selon l'invention, la cavité peut être nettement moins haute que celle des dispositifs dans lesquels le prélèvement est effectué par gravité, ce qui permet de réduire d'environ 50% la hauteur de l'ensemble.

Le dispositif selon l'invention est d'un coût moins important que les dispositifs de prélèvement réalisés antérieurement, car il est de construction beaucoup plus simple. En particulier, il n'y a pratiquement plus de problème d'étanchéité dont la résolution est coûteuse.

Le dispositif étant étanche, il n'y a pas de risque de fuites de produit ou de poussière à travers le dispositif. Cela est important car les dispositifs actuels sont souvent le siège de fuites, surtout après une certaine durée d'utilisation, et ces fuites salissent une partie de l'installation dans laquelle le dispositif est utilisé.

Enfin, il est facile d'obtenir un échantillon ayant un volume ou un poids prédéterminé; il suffit pour cela d'arrêter l'aspiration lorsque ce volume ou ce poids est atteint.

Le dispositif comporte, de préférence, une trémie qui est destinée à être interposée sur le flux de produit, dans laquelle est disposée la cavité, et qui est traversée par l'arbre creux. Le seul problème d'étanchéité à résoudre est la traversée de la paroi de la trémie par l'arbre et ce problème est facilement résolu par un simple joint.

La cavité a, de préférence, une section sensiblement triangulaire dans le plan vertical.

0106765

On a décrit ci-après, à titre d'exemple non limitatif, un mode de réalisation du dispositif selon l'invention, avec référence au dessin annexé dans lequel :

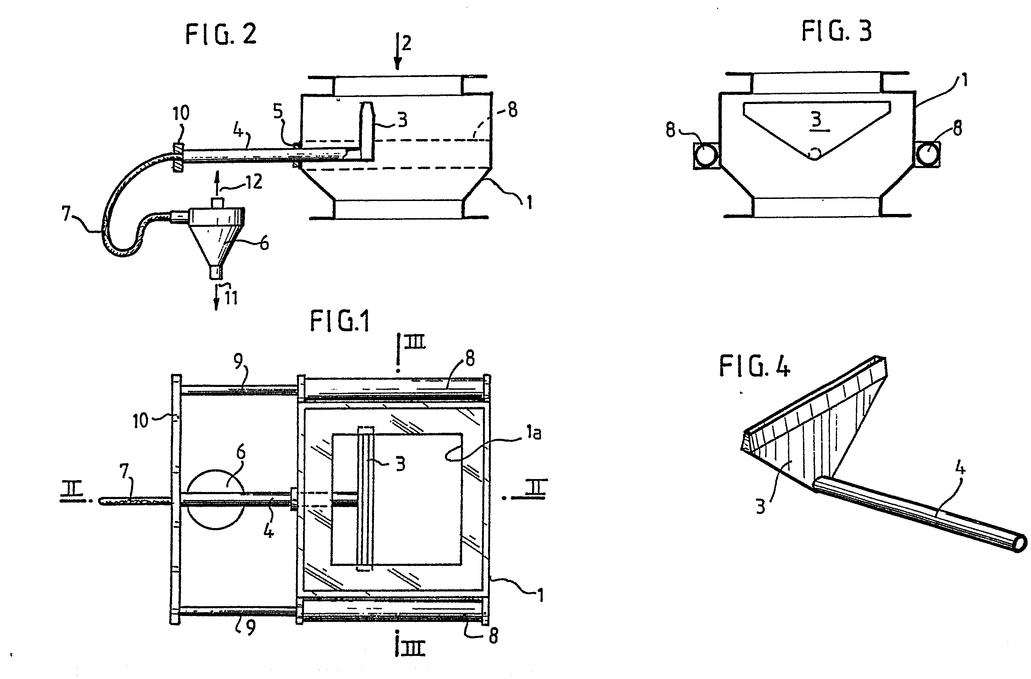

La Figure 1 est une vue en plan du dispositif;

La Figure 2 en est une coupe suivant II-II de la Figure 1;

La Figure 3 en est une coupe suivant III-III de la Figure 1;

La Figure 4 est une vue en perspective de la cavité de prélèvement et de son arbre creux de support.

Tel qu'il est représenté au dessin, le dispositif de prélèvement selon l'invention comprend une trémie 1 destinée à être insérée dans un circuit vertical ou incliné qui est parcouru par le produit à contrôler et est schématisé par la flèche 2.

Dans la trémie 1 est disposée une cavité 3 qui, dans le plan vertical, a une section triangulaire et dont la longueur est supérieure à la dimension correspondante de l'ouverture la de la trémie 1. Cette cavité 3 est fixée à un arbre creux 4 qui part de la base de la cavité et s'étend perpendiculairement à celle-ci. Cet arbre traverse l'une des parois latérales de la trémie 1, avec interposition d'un joint d'étanchéité 5, et est relié à un aspirateur 6 par un tuyau souple 7.

De part et d'autre de la trémie 1 sont disposés deux vérins 8 qui sont parallèles à l'arbre 4 et dont les tiges de piston 9 sont reliées l'une à l'autre par une traverse 10 fixée à l'arbre 4. Des moyens non représentés permettent d'alimenter en fluide moteur les vérins 8 de façon à imprimer un mouvement alternatif de va-et-vient aux tiges 9, à l'arbre 4 et à la cavité 3. Ces moyens d'alimentation peuvent être commandés par un programmateur qui permet de régler le nombre d'aller et retour de la cavité 3 pour chaque cycle ainsi que la vitesse de cette cavité et la fréquence des cycles.

Lors de l'utilisation du dispositif, le produit à contrôler, par exemple des grains, traverse verticalement la trémie 1, sous l'effet de son poids. On alimente les vérins 8 de façon à imprimer un mouvement de va-et-vient à la cavité 3. Une certaine partie des grains tombe dans la cavité 3 et est aspirée dans les conduits 4 et 7; ces grains sont séparés de l'air dans l'aspirateur 6 qui forme cyclone, et sont recueillis en 11, selon que l'air est évacué en 12.

0106765

Revendications.

1. Dispositif de prélèvement d'échantillons dans un flux gravitaire d'un produit granuleux ou pulvérulent, qui comprend une cavité de prélèvement allongée de manière à couvrir toute la largeur du flux, et des moyens pour imprimer un mouvement de va-et-vient transversal à cette cavité,
caractérisé en ce que la base de la cavité (3) est reliée à une source d'aspiration (6) de sorte que le contenu de cette cavité est évacué et transporté pneumatiquement.

2. Dispositif selon la revendication 1,
caractérisé en ce que la cavité (3) est supportée par un arbre creux (4) relié à la source d'aspiration (6).

3. Dispositif selon la revendication 2,
caractérisé en ce qu'il comporte une trémie (1) qui est destinée à être interposée sur le flux de produit, dans laquelle est disposée la cavité (3) et qui est traversée par l'arbre creux (4).

4. Dispositif selon la revendication 2 ou 3,
caractérisé en ce que l'arbre creux (4) s'étend perpendiculairement à la trémie.

5. Dispositif selon l'une des revendications précédentes,
caractérisé en ce que la cavité (3) a une section sensiblement triangulaire dans le plan vertical.

**FIG. 3**

**FIG. 4**

**FIG. 2**

**FIG.1**

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-3 298 235 (P.J. PLATZER et al.)<br>* Colonne 1, lignes 14-16; colonne 2, lignes 37-68; revendication 5; figures 1,2 * | 1-3,5 | G 01 N    1/20 |
| | --- | | |
| Y | US-A-3 528 279 (C. LASSEUR et al.)<br>* Colonne 1, lignes 31-32; colonne 3, lignes 35-36, 56-62; figure * | 1-3,5 | |
| | --- | | |
| A | US-A-3 270 279 (S.G. JACKSON et al.) | | |
| | --- | | |
| A | US-A-3 122 019 (L.T. WELLENIUS et al.) | | **DOMAINES TECHNIQUES RECHERCHES (Int. Cl. ³)** |
| | --- | | |
| A | GB-A-1 343 963 (PROCTER AND GAMBLE LTD.) | | G 01 N |
| | ----- | | |

Le présent rapport de recherche a été établi pour toutes les revendications

| Lieu de la recherche<br>LA HAYE | Date d'achèvement de la recherche<br>11-01-1984 | Examinateur<br>MORRELL D.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82